(19) Europäisches Patentamt / European Patent Office / Office européen des brevets

(11) **EP 2 894 707 A1**

(12) **EUROPEAN PATENT APPLICATION**
published in accordance with Art. 153(4) EPC

(43) Date of publication:
**15.07.2015 Bulletin 2015/29**

(21) Application number: **13835572.2**

(22) Date of filing: **09.09.2013**

(51) Int Cl.:
*H01M 12/08* [(2006.01)]          *H01M 4/96* [(2006.01)]

(86) International application number:
**PCT/JP2013/074249**

(87) International publication number:
**WO 2014/038692 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.09.2012   JP 2012198890**

(71) Applicants:
• **NATIONAL UNIVERSITY CORPORATION OITA UNIVERSITY**
  **Oita-shi**
  **Oita 870-1192 (JP)**

• **TOYOTA JIDOSHA KABUSHIKI KAISHA**
  **Toyota-shi, Aichi-ken, 471-8571 (JP)**

(72) Inventors:
• **TOYODA, Masahiro**
  **Oita-shi**
  **Oita 870-1192 (JP)**
• **IISAKA, Hirofumi**
  **Toyota-shi**
  **Aichi 471-8571 (JP)**

(74) Representative: **TBK**
  **Bavariaring 4-6**
  **80336 München (DE)**

(54) **CARBON MATERIAL FOR AIR ELECTRODE FOR AIR BATTERY, AND AIR BATTERY COMPRISING SAID CARBON MATERIAL**

(57)    The present invention is to provide a carbonaceous material for the air electrode of an air battery, which has more oxygen reduction reaction initiating points than conventional carbonaceous materials, and an air battery comprising the carbonaceous material. Disclosed is a carbonaceous material for use in an air electrode of an air battery, wherein an average aspect ratio of the carbonaceous material is 1 or more and less than 10, and an edge area of a surface of the carbonaceous material is 55 m²/g or more.

Fig. 7

EP 2 894 707 A1

**Description**

Technical Field

The present invention relates to a carbonaceous material for the air electrode of an air battery, which has more oxygen reduction reaction initiating points than conventional carbonaceous materials, and an air battery comprising the carbonaceous material.

Background Art

An air battery is a battery which is able to charge and discharge and which uses a metal or metal compound as anode active material and oxygen as cathode active material. Since oxygen, which is a cathode active material, can be obtained from the air and it is not needed to encapsulate the cathode active material in the air battery, the air battery can theoretically realize larger capacity than secondary batteries using a solid cathode active material.

In a lithium-air battery, which is a kind of air battery, upon discharge, a reaction described by the formula (I) proceeds in the anode:

$$\text{Formula (I):} \qquad 2Li \rightarrow 2Li^+ + 2e^-$$

The electrons generated in the formula (I) pass through an external circuit, work by an external load, and then reach the air electrode. The lithium ions ($Li^+$) generated in the formula (I) are transferred by electro-osmosis from the anode side to the air electrode side, through the electrolyte sandwiched between the anode and the air electrode.

Also, upon discharge, reactions described by the formulae (II) and (III) proceed in the air electrode:

$$\text{Formula (II):} \qquad 2Li^+ + O_2 + 2e^- \rightarrow Li_2O_2$$

$$\text{Formula (III):} \qquad 2Li^+ + 1/2O_2 + 2e^- \rightarrow Li_2O$$

The lithium peroxide ($Li_2O_2$) and lithium oxide ($Li_2O$) thus generated are stored in the form of solid and in the air electrode.

Upon charge, a reaction reverse to the formula (I) proceeds in the anode, while reactions reverse to the formulae (II) and (III) proceed in the air electrode. Therefore, the lithium metal is regenerated in the anode and allows the battery to re-discharge.

In general, a carbonaceous material is used in the air electrode of air batteries. However, there have been no conclusive findings on what characteristics of the carbonaceous material influence the capacity of the air electrode. Therefore, there have been no decisive guidelines for how the carbonaceous material used in the air electrode can be improved to increase the capacity of the air battery. As a technique for obtaining a high-capacity non-aqueous electrolyte battery, a non-aqueous electrolyte battery comprising a cathode, an anode and a non-aqueous electrolyte layer is disclosed in Patent Literature 1, wherein the cathode is mainly made of a carbonaceous substance in which the pore volume of pores having a diameter of 1 nm or more is 1.0 mL/g or more; the anode contains an anode active material that occludes and releases metal ions; and the non-aqueous electrolyte layer is sandwiched between the cathode and anode.

Citation List

Patent Literature 1: Japanese Patent Application Laid-Open No. 2002-015737

Summary of Invention

Technical Problem

Examples of non-aqueous electrolyte batteries are described in paragraphs [0056] to [0064] of Patent Literature 1, in which Ketjen Black is used in the air electrode. However, as a result of further research on the non-aqueous electrolyte batteries disclosed in Patent Literature 1, the inventors of the present invention have found that in the case of using Ketjen Black in the air electrode, the capacity still remains low and the reaction resistance is high.

The present invention was achieved in light of the above circumstances. An object of the present invention is to provide a carbonaceous material for the air electrode of an air battery, which has more oxygen reduction reaction initiating points than conventional carbonaceous materials, and an air battery comprising the carbonaceous material.

Solution to Problem

The carbonaceous material for the air electrode of an air battery of the present invention is a carbonaceous material wherein the average aspect ratio of the carbonaceous material is 1 or more and less than 10, and the edge area of the surface of the carbonaceous material is 55 $m^2/g$ or more.

The carbonaceous material for the air electrode of an air battery of the present invention is preferably exfoliated carbon fibers.

The first air battery of the present invention is an air battery comprising at least an air electrode, an anode and an electrolyte layer disposed between the air electrode and the anode, wherein the air electrode contains the above-mentioned carbonaceous material for the air electrode of an air battery.

In the first air battery of the present invention, the anode may contain a lithium metal or a lithium compound.

The second air battery of the present invention is an air battery comprising: an air electrode; a lithium metal anode or a lithium compound anode; and an electrolyte disposed between the air electrode and the anode, wherein the air electrode contains a porous carbon fiber material having connected three-phase interface sites; a D/G ratio of the exfoliated carbon fibers that means a ratio of a graphitized part D to a defective part G obtained from a Raman shift, is 0.1 to 1.5; and the edge area of the three-phase interface sites is 55 $m^2/g$ or more.

In the second air battery of the present invention, the porous carbon fiber material is preferably exfoliated carbon fibers.

In the second air battery of the present invention, the average aspect ratio of the porous carbon fiber material is preferably 1 or more and less than 10.

Advantageous Effects of Invention

According to the present invention, the carbonaceous material of the present invention has more oxygen reduction reaction initiating points than conventional carbonaceous material, because the edge area of the surface of the carbonaceous material is 55 $m^2/g$ or more. As a result, when the carbonaceous material is used in the air electrode of an air battery, electrons can be transferred between the carbonaceous material and more oxygen molecules, and the capacity of the air battery can be higher than conventional air batteries.

Brief Description of Drawings

Fig. 1 is a view showing an example of the layer constitution of the air battery of the present invention, and it is also a schematic sectional view of the layer constitution along the stacked direction of the layers.

Fig. 2 is a schematic view showing the chemical structure of the carbonaceous material used in the present invention.

Figs. 3 are an enlarged schematic view of the structure of exfoliated carbon fibers and a schematic view of the chemical structure of carbon atom layers thereof.

Fig. 4 is an SEM image of the exfoliated carbon fibers of Example 1.

Fig. 5 is a TEM image of the exfoliated carbon fibers of Example 1.

Figs. 6 are a graph showing changes in the D/G ratio in any three of lines out of lines of measurement points shown in Fig. 5, and a graph showing changes in the D/G ratio in any three of rows out of rows of measurement points shown in Fig. 5.

Fig. 7 is a graph showing the relationship between the reaction resistance and charging capacity of the air batteries of Examples 15 and 18 and Comparative Examples 9 and 10.

Fig. 8 is a graph showing the relationship between the reaction resistance of air batteries of Examples 15 to 21 and Comparative Examples 11 to 13 and the edge area of the surface of exfoliated carbon fibers used in those air batteries.

Fig. 9 is a schematic view of a constant current electrochemical treatment device.

Fig. 10 is a schematic view of a temperature programming device used for quantitative determination of the edge area.

Description of Embodiments

1. Carbonaceous material for the air electrode of an air battery

The carbonaceous material for the air electrode of an air battery of the present invention is a carbonaceous material wherein the average aspect ratio of the carbonaceous material is 1 or more and less than 10, and the edge area of the surface of the carbonaceous material is 55 $m^2/g$ or more.

As described above, since the air battery using Ketjen Black in the air electrode layer is still low in the capacity and significantly poor in the endurance, the air battery does not bear repeated use. This is because, in the prior art, the surface structure of carbonaceous materials has not been sufficiently studied yet, and almost no findings have been obtained on the amount of functional groups attached to the surface of carbonaceous materials and on the edge area of the surface of carbonaceous materials, both of which might allow an air battery to increase the capacity.

The inventors of the present invention focused on carbonaceous materials having on the surface a larger edge area than conventional carbonaceous materials. As a result of a great deal of research, they have found the following: by using, in an air electrode, a carbonaceous material having a predetermined edge area on the surface and a predetermined average aspect ratio, the number of oxygen reduction reaction initiating points can be increased, and the reaction resistance of the air electrode can be inhibited; therefore, the charging capacity of the air electrode can be increased. Based on this finding, they achieved the present invention.

The average aspect ratio of the carbonaceous material used in the present invention is 1 or more and less than 10. As just described, by using the carbonaceous material having a relatively small average aspect ratio, the carbonaceous material can be easily closely packed into the air electrode. As a result, the density of the air electrode is increased, and thus the number of electrode reaction sites can be increased.

In the present invention, examples of methods for measuring the average aspect ratio of the carbonaceous material include the following method: a several number of particles of the carbonaceous material on an image output from a transmission electron microscope (hereinafter referred to as TEM) are each subjected to the measurement of the longer and shorter diameters thereof; aspect ratios are calculated from the longer and shorter diameters; and then the average of the aspect ratios is calculated.

The form of the carbonaceous material used in the present invention is not particularly limited and may be a flake form, a fiber form, a flat plate form, a prismatic form, a cylindrical form or a cocoon form, for example, as long as the average aspect ratio is within the above range. Of them, the carbonaceous material used in the present invention is preferably in a flake form.

The edge area of the surface of the carbonaceous material used in the present invention is 55 $m^2$/g or more.

In the present invention, the edge area of the surface of the carbonaceous material means the area occupied by a carbon edge part on the surface of the carbonaceous material. The carbon edge part means a part occupied by edge carbon atoms.

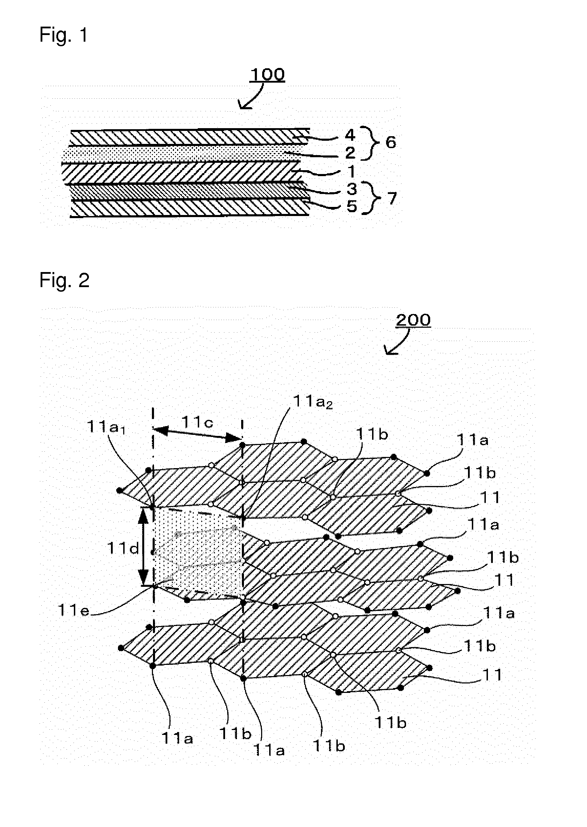

Fig. 2 is a schematic view showing the chemical structure of the carbonaceous material used in the present invention. Fig. 2 shows a carbonaceous material model having three carbon atom layers. However, the carbonaceous material model is an example given solely for the illustration of the edge area of the surface, and the carbonaceous material used in the present invention is not limited to the one shown in Fig. 2.

A carbonaceous material 200 is made of a stack of three carbon atom layers 11. Hexagons shown in Fig. 2 represent an aromatic ring each, which is composed of carbon atoms.

In Fig. 2, black circles 11a represent edge carbon atoms in carbon atom layers 11, while white circles 11b represent carbon atoms other than the edge carbon atoms in the carbon atom layers 11. In the present invention, the edge carbon atoms mean carbon atoms which are present on the edges of the carbon atom layers and allow each of the edges to make an angle of less than 180° with the carbon atom being set at a center point. Therefore, as shown by the white circles in Fig. 2, such carbon atoms that are located at the edges of the carbon atom layers but the edges centered at the carbon atoms have an angle of 180° or more, or such carbon atoms that are located inside the carbon atom layers, are not deemed as the edge carbon atoms. Also, such carbon atoms that are buried in the carbonaceous material and are not present on the surface of the carbonaceous material are not taken into account in the calculation of the edge area of the surface of the carbonaceous material, even if they are the edge carbon atoms. While the edge carbon atoms can also bind to atoms other than carbon atoms, carbon atoms other than the edge carbon atoms in the carbon atom layers basically do not bind to atoms other than carbon atoms.

As described above, the edge area of the surface of the carbonaceous material means the area of the part occupied by the edge carbon atoms present on the surface of the carbonaceous material. The area of the part occupied by the edge carbon atoms is one obtained by multiplying the distance between the closest edge carbon atoms by the distance between the carbon atom layers. Hereinafter, a combination of edge carbon atoms represented by black circles $11a_1$ and $11a_2$ will be described, as an example of the closest edge carbon atoms present on the surface of the carbonaceous material. In general, the distance between carbon atoms in the carbon atom layers is 0.142 nm. Therefore, a distance 11c between the edge carbon atoms represented by the black circles $11a_1$ and $11a_2$ is as follows: (0.142×sin 60°)×2=0.246 nm. Also, a layer distance 11d between the carbon atom layers is generally 0.335 nm. Therefore, an area 11e of the part occupied by the edge carbon atoms is as follows: 0.246 nm×0.335 nm=0.0824 $nm^2$. By performing this calculation on all the edge carbon atoms on the surface of the carbon atom layers, the edge area of the surface of the carbonaceous material is obtained.

The edge area of the surface of the carbonaceous material used in the present invention is preferably 80 $m^2$/g or more, more preferably 90 $m^2$/g or more. Also, the edge area of the surface of the carbonaceous material used in the present invention is preferably 110 $m^2$/g or less, more preferably 100 $m^2$/g or less.

Hereinafter, an example of the method for measuring the edge area of the surface of the carbonaceous material will be described. The following method is just an example, and the edge area of the surface of the carbonaceous material defined in the present invention is not limited to the edge area measured by the following method.

First, the carbonaceous material is placed in a temperature programming device equipped with a heating furnace, etc. Next, the air inside the temperature programming device is replaced with an inert atmosphere such as helium, and then the temperature inside the temperature programming device is set to 100°C or more and kept for a predetermined time, thereby releasing moisture adsorbed in the carbonaceous material. Then, the temperature inside the temperature programming device is increased to 800 to 1,500°C at a heating rate of 2 to 6°C/min and kept for a predetermined time to make thermal desorption of carbon monoxide and carbon dioxide from the carbonaceous material. After the temperature inside the temperature programming device is decreased to 400 to 700°C, hydrogen is supplied for a predetermined time to the carbonaceous material subjected to the thermal desorption, thereby binding hydrogen to the edge carbon atoms of the surface of the carbonaceous material. Next, the hydrogen supply is stopped. Instead, while the hydrogen inside the temperature programming device is replaced with an inert atmosphere, the temperature inside the device is once cooled to room temperature. Then, the temperature inside the temperature programming device is increased to 600 to 1,000°C at a heating rate of 10 to 30°C/min. Next, a mixture of inert gas and oxygen is supplied and the temperature inside the temperature programming device is increased to 800 to 1,200°C at a heating rate of 2 to 6°C/min, thereby making thermal oxidation to the extent of converting hydrogen atoms (H) bound to the edge carbon atoms into water ($H_2O$). The moisture released upon the thermal oxidation is quantitated with a moisture meter. By obtaining the molarity of hydrogen ($H_2$) from the molarity of the quantitated moisture ($H_2O$) and from the following formula (A), the edge area of the surface of the carbonaceous material, that is, edge area S is calculated. In the formula (A), "0.082" is the value of the area 11e of the part occupied by the edge carbon atoms shown in Fig. 2.

$$\text{Formula (A):} \qquad S=(M\times6.0\times10^{23})\times0.082$$

In the formula (A), S is the edge area of the surface of the carbonaceous material ($m^2$), and M is the molarity of hydrogen (mol/g).

When a conventional carbonaceous material such as Ketjen Black is used, the discharging capacity of an air battery still remains low. The reason is considered because the number of reaction initiating points in the carbonaceous material and the area of reaction sites therein are significantly smaller than, for example, the below-described exfoliated carbon fibers (also called as "expanded carbon fibers" in other terms). "Reaction" referred herein means the oxygen reduction reaction having a mainstream of reaction described by at least any one of the above formulae (II) and (III).

As the indicator of the number of the reaction initiating points, for example, there may be mentioned a D/G ratio. The D/G ratio means the ratio of the peak intensity at 1360 $cm^{-1}$ (D band) to the peak intensity at 1580 $cm^{-1}$ (G band) in the Raman spectrum of a carbonaceous material. The D band is a defective part which is likely to be a reaction initiating point in the carbonaceous material, such as a peak corresponding to a carbon edge part, distorted part, etc. The G band is a graphitized part which is less likely to be a reaction initiating point in the carbonaceous material, such as a peak corresponding to a carbon network surface, etc. Therefore, it is thought that as the D/G ratio increases, the number of the reaction initiating points also increases.

The defective part corresponding to the D band is considered to be a part where an oxygen molecule receives an electron from the carbonaceous material first. It is thought that an oxygen radical generated from the oxygen molecule having received an electron, a metal ion which has conducted through the electrolyte layer, and so on react to precipitate a metal oxide on the defective part corresponding to the D band and the graphitized part corresponding to the G band.

In the carbonaceous material used in the present invention, the proportion of the defective part to the graphitized part obtained from the Raman shift, that is, the D/G ratio, is preferably 0.10 to 1.5. When the D/G ratio of the carbonaceous material is less than 0.10, the proportion of the defective part on the surface of the carbonaceous material (the reaction initiating point relating to oxygen reduction) is too low, and the proportion of the graphitized part on the surface of the carbonaceous material is too high. Therefore, when the carbonaceous material is used in the air electrode of an air battery, the effective discharge voltage of the air battery may be small. On the other hand, when the D/G ratio of the carbonaceous material is more than 1.5, the proportion of the defective part on the surface of the carbonaceous material is too high and may result in undesired side reactions.

The D/G ratio of the carbonaceous material used in the present invention is more preferably 0.15 or more, still more preferably 0.20 or more. Also, the D/G ratio of the carbonaceous material used in the present invention is more preferably 1.4 or less, still more preferably 1.2 or less.

In the present invention, examples of methods for measuring the D/G ratio of the carbonaceous material include the above-mentioned method that calculates the D/G ratio from the peak intensities of the G and D bands in the Raman spectrum of the carbonaceous material. As shown in the below-described "Examples", in the case of measuring the carbonaceous material by Raman spectroscopy, generally, the measurement results may vary in a certain range, depending on the electron density of the carbonaceous material, the amount of defects in the carbonaceous material, and crystallites contained in the carbonaceous material.

The amount of oxygen functional groups contained in the carbonaceous material used in the present invention is preferably 50 to 20,000 $\mu$mol/g.

The oxygen functional groups contained in the carbonaceous material promotes the adsorption of highly polar molecules from both gas and liquid phases into the carbonaceous material. However, when the amount of the oxygen functional groups is too large, highly polar molecules such as lithium oxide competitively adsorb to the oxygen functional groups. As a result, the pores that the carbonaceous material generally has are clogged with the lithium oxide, etc. Therefore, the discharging capacity of the air battery using the carbonaceous material having a too large amount of oxygen functional groups, may be small.

The amount of the oxygen functional groups contained in the carbonaceous material used in the present invention is more preferably 70 $\mu$mol/g or more, still more preferably 100 $\mu$mol/g or more. Also, the amount of the oxygen functional groups contained in the carbonaceous material used in the present invention is more preferably 15,000 $\mu$mol/g or less, still more preferably 10,000 $\mu$mol/g or less.

Hereinafter, an example of the method for measuring the oxygen functional groups contained in the carbonaceous material will be described. The following method is just an example, and the oxygen functional groups contained in the carbonaceous material used in the present invention are not limited to those measured by this method.

First, the carbonaceous material is placed in a temperature programming device equipped with a heating furnace, etc. Next, the air inside the temperature programming device is replaced with an inert atmosphere such as helium, and then the temperature inside the temperature programming device is set to 100°C or more and kept for a predetermined time, thereby releasing moisture adsorbed in the carbonaceous material. Then, the temperature inside the temperature programming device is increased to 800 to 1,500°C at a heating rate of 2 to 6°C/min and kept for a predetermined time to make thermal desorption of carbon monoxide and carbon dioxide from the carbonaceous material. The carbon monoxide and carbon dioxide thus desorbed are quantitated by gas chromatography. By conducting waveform separation on the thus-obtained temperature programmed desorption spectrum, functional groups containing oxygen can be identified and quantitated.

The carbonaceous material subjected to the temperature-programmed desorption can be also used in the above-described edge area measurement.

As a typical example of the carbonaceous material which satisfies all the conditions of the average aspect ratio, the edge area of the carbon surface and the D/G ratio, there may be mentioned exfoliated carbon fibers. The carbonaceous material for the air electrode of an air battery according to the present invention, is preferably exfoliated carbon fibers.

The exfoliated carbon fibers are fine carbon fibers which are obtained by synthesizing a graphite intercalation compound using a carbon fiber material, and then heating the thus-synthesized graphite intercalation compound. The method for producing the exfoliated carbon fibers is not particularly limited, and examples thereof include a chemical treatment method and an electrochemical treatment method. A classification treatment and/or grinding treatment can be carried out on the exfoliated carbon fibers, depending on the physical properties required of the carbonaceous material for the air electrode of an air battery.

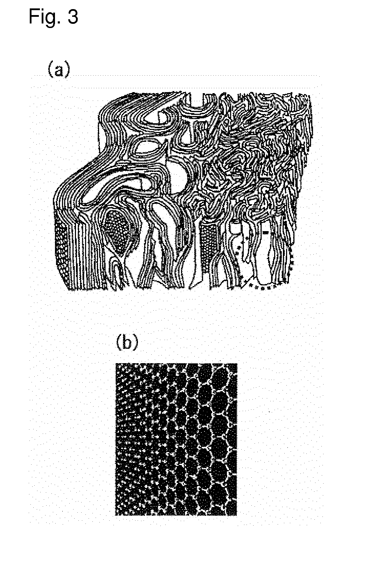

Fig. 3(a) is an enlarged schematic view of the structure of the exfoliated carbon fibers, and Fig. 3(b) is a schematic view of the chemical structure of the carbon atom layers of the exfoliated carbon fibers. Fig. 3(b) is an enlarged schematic view of the area circled by a dashed line shown in Fig. 3(a).

The carbon fiber material used for the production of the exfoliated carbon fibers is preferably PITCH-based carbon fibers, PAN-based carbon fibers, vapor-grown carbon fibers or the like. As with graphite, most of these carbon fibers have the sp$^2$ hybrid orbital. For example, PITCH-based carbon fibers heat-treated at high temperature have extremely high crystallinity, compared to simple graphite, and strong binding between the carbon atoms, which is derived therefrom, is influential to the strength and elasticity of the PITCH-based carbon fibers. In general, infusibilizing treatment method and heat treatment temperature are significantly influential to an increase in the strength and elasticity of PAN-based carbon fibers and PITCH-based carbon fibers, and the excellent physical properties of these carbon fiber materials are maintained even in the resulting exfoliated fibrillar fine fibers.

In graphite having a layered structure and carbon fibers, carbon atoms in the a-axis and b-axis directions, which are directions that are crystallographically approximately parallel to the carbon atom layers, are bound by strong covalent bonds. On the other hand, carbon atoms in the c-axis direction, which is a direction that is approximately vertical the carbon atom layers, are merely bound by weak Van der Waals' force. Therefore, the graphite intercalation compound is produced by intercalating various kinds of atoms, molecules, ions, etc., between the carbon atom layers.

Methods for synthesizing the graphite intercalation compound using the carbon fiber material, include chemical treatment methods and electrochemical treatment methods, for example. Of them, according to a chemical oxidation method, which is one of the chemical treatment methods, the graphite intercalation compound can be synthesized by adding an oxidant such as concentrated sulfuric acid, nitric acid or potassium permanganate, or a base such as potassium hydroxide or sodium hydroxide, to the carbonaceous material and thereby intercalating the molecules of the oxidant or base between the carbon atom layers. Meanwhile, for example, according to an electrochemical oxidation method, which is one of the electrochemical treatment methods, the graphite intercalation compound can be synthesized by electrochemically oxidizing the carbon fiber material in an acid electrolyte such as nitric acid or sulfuric acid. Pyrolyzing the thus-obtained graphite intercalation compound generates small fibers having an average particle diameter of 1 μm or less. This is because the atoms, molecules, ions or the like, intercalated between the carbon atom layers are pyrolyzed by a heat treatment and when the resulting pyrolysis product is released out of the carbon atom layers, part of the layered structure of the carbon atom layers is destructed and/or the distance between the carbon atom layers is extended; therefore, the form of the carbon fiber material is changed from a simple carbon fiber form to a fine fiber form.

Hereinafter, a method of electrochemical treatment of the exfoliated carbon fibers and a method of chemical treatment of the same, will be described. Methods for producing the exfoliated carbon fibers, which can be suitably applied to the present invention, are not limited to the methods described below.

The method of electrochemical treatment of the exfoliated carbon fibers preferably has an electrochemical treatment step, a washing step and a carbonizing treatment step. The electrochemical treatment step is a step of intercalating at least one selected from the group consisting of atoms, molecules and ions (hereinafter may be referred to as "atoms, etc.") between the carbon atom layers by an electrochemical treatment to produce the graphite intercalation compound. The washing step is a step of washing away excess liquid electrolyte components, atoms, etc., attached to the surface of the graphite intercalation compound. The carbonizing treatment step is a step of removing the atoms, etc., intercalated between the carbon atom layers of the graphite intercalation compound and extending the distance between the carbon atom layers. The electrochemical treatment method is not limited to the above three steps. For example, between the washing step and the carbonizing treatment step, a drying step may be provided to remove solvents, etc., used in the washing step, or a grinding step may be provided to efficiently proceed with the carbonizing treatment. Also, after the carbonizing treatment step, a classifying step, etc., may be employed to obtain the carbonaceous material having a particle diameter within a predetermined range.

In the electrochemical treatment method, as the electrochemical treatment device, a known electrolytic oxidation device can be appropriately used. Examples of the electrochemical treatment device include an electrochemical cell and a current and voltage controlling device such as potentiostat/galvanostat. As the electrochemical cell, for example, there may be used a three electrode cell comprising a working electrode, a counter electrode and a reference electrode. Examples of the inner constitution of the three electrode cell include one in which the working electrode on which the carbon fiber material is fixed, the counter electrode and the reference electrode are immersed in liquid electrolyte. Depending on the capacity of the three electrode cell, the amount of the liquid electrolyte is preferably an amount which allows the carbon fiber material to be fully immersed in the liquid electrolyte.

In general, an acid can be used as liquid electrolyte. The type of the acid is not particularly limited, as long as electrolysis is caused by applying current to the acid. Examples of the acid include organic acids, inorganic acids and mixtures thereof. Examples of inorganic acids include sulfuric acid, concentrated sulfuric acid, nitric acid, concentrated nitric acid and phosphoric acid. Examples of organic acids include formic acid and acetic acid. Of these acids, preferred are concentrated nitric acid, formic acid and dilute sulfuric acid at a concentration of 9 mol/dm$^3$ or less. More preferred is concentrated nitric acid.

Atoms, etc., are intercalated between the carbon atom layers by connecting the working, counter and reference electrodes to the current and voltage controlling device such as potentiostat/galvanostat and conducting the electrochemical treatment. When the acid is used as liquid electrolyte, acid molecules are intercalated between the carbon atom layers. In the electrochemical treatment, the current value and treatment time can be appropriately selected, depending on the amount of the carbon fiber material and/or the type and concentration of the liquid electrolyte used in the electrochemical treatment. For example, in the case of using a PITCH-based carbon fiber material in an amount of 0.01 to 1 g as carbon fiber material, it is preferable to apply a constant current at a current density of 5 to 15 A/g, until the applied charge amount reaches 2,000 to 3,000 C.

By such an electrochemical treatment, an interlayer reaction is performed within the fibers. Therefore, multifilament properties, that is, properties of bundle of many twisted fine fibers, can be provided to the carbon fibers.

The cleaning solution which can be used in the cleaning step is not particularly limited, as long as it can remove excess liquid electrolyte components, atoms, etc., adhering to the surface of the graphite intercalation compound. Examples of the cleaning solution include water, organic acids, organic acid esters and mixtures thereof. For example, as the organic acids, formic acid, acetic acid and oxalic acid may be used. For example, as the organic acid esters, esters of the above-mentioned organic acids may be used. After washing the graphite intercalation compound with the cleaning solution, as needed, an alkali treatment may be further carried out thereon, using a basic solution such as ammonia water, sodium hydroxide aqueous solution or potassium hydroxide aqueous solution, or a basic gas such as ammonia. After the alkali treatment using the basic solution or gas, the graphite intercalation compound may be further washed with water, as needed.

After the washing step, it is preferable to appropriately dehydrate the graphite intercalation compound and dry the same. Prior to the carbonizing treatment, the graphite intercalation compound may be appropriately ground after the washing step.

The carbonizing treatment is a step of exfoliating the carbon fibers by, after the washing step, subjecting the graphite intercalation compound to a heat treatment to be decomposed. In particular, first, after the washing step, the graphite intercalation compound is placed inside a heating device and heated at 700 to 1,200°C for 3 to 10 seconds. By such a quick heating for such a quite short time, the distance between the carbon atom layers is extended, and desired exfoliated carbon fibers can be produced.

In the carbonizing treatment, the heating temperature is preferably 750°C or more, more preferably 1,000°C or more. When the heating temperature is too low, as shown in Comparative Examples 1 to 3 to be described below, the edge area of the carbonaceous material may be too small.

The exfoliated carbon fibers obtained after the carbonizing treatment may be highly dispersed in a dispersion medium by appropriately carrying out an ultrasonication treatment thereon in the dispersion medium. Examples of the dispersion medium that can be used in the ultrasonication treatment include water, alcohols such as methanol and ethanol, acetone and mixtures thereof.

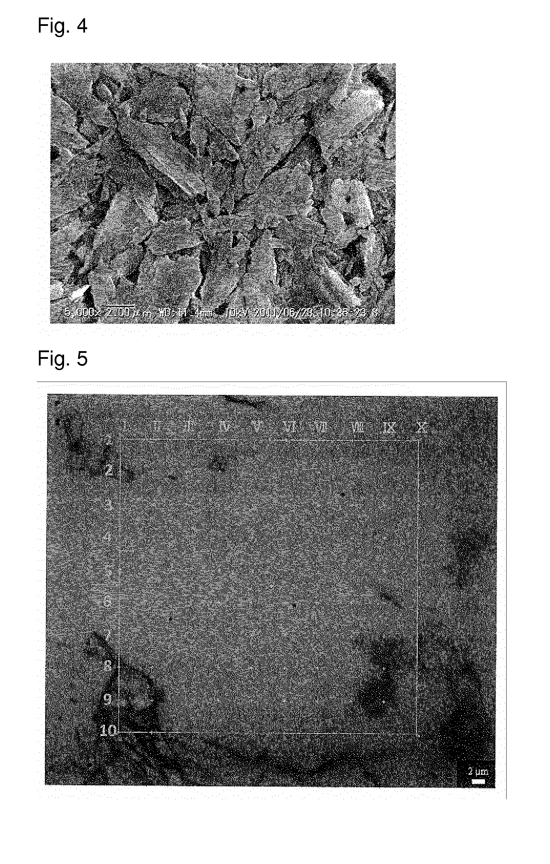

Fig. 4 is an SEM image of the exfoliated carbon fibers of Example 1 to be described below. As is clear from Fig. 4, the exfoliated carbon fibers obtained by the electrochemical treatment method have normal edges on the surface thereof. "Normal edges" described herein means edge parts of the exfoliated carbon fibers, which are not curved and maintain an angular shape, and which contain the edge carbon atoms that can involve in the oxygen reduction reaction. Therefore, the surface of the exfoliated carbon fibers obtained by the electrochemical treatment method has a larger edge area than ever before. As a result, the exfoliated carbon fibers have a smaller reaction resistance and a larger charging capacity in comparison with conventional carbonaceous materials.

Examples of the chemical treatment method of the exfoliated carbon fibers include an alkali activation method. In the alkali activation method, an alkaline solution such as alkaline aqueous solution and a known reaction device can be appropriately used. The alkaline aqueous solution which can be used in the alkali activation method is preferably a strong alkaline aqueous solution, and preferred is a potassium or sodium hydroxide aqueous solution at a concentration of 6 mol/L or more, or a tetramethylammonium hydroxide aqueous solution at a concentration of 20% by mass or more. The alkali treatment time and temperature can be appropriately selected, depending on the amount and size of the carbon fiber material used for the alkali treatment and the sort and concentration of the alkaline solution used for the same. For example, in the case of using a PITCH-based carbon fiber material in an amount of 0.1 to 10 g as carbon fiber material, it is preferable to carry out the alkali treatment at a temperature of 60 to 95°C for 1 to 10 hours.

2. Air battery

The air battery of the present invention is an air battery comprising at least an air electrode, an anode and an electrolyte layer disposed between the air electrode and the anode, wherein the air electrode contains the above-mentioned carbonaceous material for the air electrode of an air battery.

In one of embodiments of the present invention, the air battery comprises: an air electrode; a lithium metal anode or a lithium compound anode; and an electrolyte disposed between the air electrode and the anode, wherein the air electrode contains a porous carbon fiber material having connected three-phase interface sites; the D/G ratio of the exfoliated carbon fibers that means a ratio of a graphitized part D to a defective part G obtained from a Raman shift, is 0.1 to 1.5; and the edge area of the three-phase interface sites is 55 m$^2$/g or more. "Connected three-phase interface sites" described herein mean the sites where a carbon electrode, lithium ions and oxygen gas coexist to promote an electrode reaction. Also, "porous carbon fiber material" described herein is preferably exfoliated carbon fibers.

The average aspect ratio of the porous carbon fiber material is preferably 1 or more and less than 10. Examples of methods for measuring the average aspect ratio include the following method: a several number of particles of the porous carbon fiber material on an image output from a TEM are each measured and subjected to the measurement of the longer and shorter diameters thereof; aspect ratios are calculated from the longer and shorter diameters; and then the average of the the aspect ratio is calculated.

Fig. 1 is a view showing an example of the layer constitution of the air battery of the present invention, and it is also a schematic sectional view along the stacked direction of the layers. The air battery of the present invention is not limited to this example.

An air battery 100 is provided with an air electrode 6 provided with an air electrode layer 2 and an air electrode current collector 4; an anode 7 provided with an anode active material layer 3 and an anode current collector 5; and an electrolyte layer 1 sandwiched between the air electrode 6 and the anode 7.

Hereinafter, the air electrode, anode and electrolyte layer, which constitute the air battery of the present invention, and a separator and a battery case, which are suitably used in the air battery of the present invention, will be described in detail.

The air electrode used in the present invention has an air electrode layer and, in general, further has an air electrode current collector and an air electrode lead connected to the air electrode current collector.

The air electrode layer contains at least the above-mentioned carbonaceous material for the air electrode of the air battery of the present invention. As needed, it may further contain a catalyst, a binder, etc.

The content of the carbonaceous material in the air electrode layer is preferably 10 to 99% by mass, more preferably 20 to 95% by mass, provided that the mass of the whole air electrode layer is referred as 100% by mass.

A too small content of the carbonaceous material leads to a decrease in reaction sites that may cause a decrease in battery capacity. On the other hand, a too large content of the carbonaceous material leads to a relative decrease in the content of the below-described catalyst, which may result in poor catalyst performance.

As the catalyst used in the air electrode layer, for example, there may be mentioned an oxygen-activating catalyst. The examples include platinum group metals such as nickel, palladium and platinum; perovskite-type oxides containing a transition metal such as cobalt, manganese or iron; inorganic compounds containing a noble metal oxide such as ruthenium, iridium or palladium; metal-coordinated organic compounds having a porphyrin or phthalocyanine structure; and manganese oxide.

From the viewpoint of smooth electrode reaction, the catalyst can be carried by the above-mentioned carbonaceous material.

The air electrode layer contains at least the carbonaceous material, and it is more preferable that the air electrode layer further contains a binder for fixing the carbonaceous material. Examples of binders include polyvinylidene fluoride (PVdF), polytetrafluoroethylene (PTFE) and rubber resins such as styrene-butadiene rubber (SBR). The content of the binder in the air electrode layer is not particularly limited. However, the content is preferably 1 to 40% by mass, more preferably 1 to 10% by mass, provided that the whole air electrode layer is referred to as 100% by mass.

Methods for producing the air electrode layer include, but not limited to, the following methods, for example: a method in which materials for the air electrode layer, including the carbonaceous material, are mixed and roll-pressed; and a method in which a slurry is prepared by mixing a solvent and materials for the air electrode layer, including the carbonaceous material, and the slurry is applied to the below-described air electrode current collector. Methods for applying the slurry to the air electrode current collector include known methods such as a spraying method, a screen printing method, a doctor blade method, a gravure printing method and a die coating method.

The thickness of the air electrode layer varies depending on the application of the air battery, etc. For example, the thickness is preferably 2 to 500 $\mu$m, more preferably 5 to 300 $\mu$m.

The air electrode current collector used in the present invention collects current from the air electrode layer. The material for the air electrode current collector is not particularly limited, as long as it is electroconductive. However, the examples include stainless-steel, nickel, aluminum, iron, titanium and carbon. As the form of the air electrode current collector, there may be mentioned a foil form, a plate form and a mesh (grid) form, for example. From the viewpoint of excellent current collection efficiency, the air electrode current collector preferably has a mesh form. In this case, generally, the air electrode current collector in a mesh form is disposed inside the air electrode layer. In addition, the air battery of the present invention may further has a different air electrode current collector (such as a current collector in a foil form) for collection of charge collected by the air electrode current collector in a mesh form. In the present invention, the below-described battery case may also function as the air electrode current collector.

For example, the thickness of the air electrode current collector is preferably 10 to 1,000 $\mu$m, more preferably 20 to 400 $\mu$m.

The anode used in the present invention preferably has an anode active material layer containing an anode active material. In general, it further has an anode current collector and an anode lead connected to the anode current collector. In the present invention, the anode may contain a lithium metal or a lithium compound.

The anode active material layer used in the present invention contains an anode active material containing at least one selected from the group consisting of a metal material, an alloy material and a carbonaceous material. Concrete examples of metals and alloy materials that can be used in the anode active material include: alkali metals such as lithium, sodium and potassium; the Group 2 elements such as magnesium and calcium; the Group 13 elements such as aluminum; transition metals such as zinc and iron; and alloy materials and compounds containing these metals.

Examples of alloys containing a lithium element include lithium-aluminum alloy, lithium-tin alloy, lithium-lead alloy and lithium-silicon alloy. Examples of metal oxides containing a lithium element include lithium titanium oxide. Examples of metal nitrides containing a lithium element include lithium-cobalt nitride, lithium-iron nitride and lithium-manganese nitride. Also in the anode active material layer, a solid electrolyte-coated lithium can be used.

The anode active material layer may contain only the anode active material, or it may contain the anode active material and at least one of an electroconductive material and a binder. For example, when the anode active material is in a foil form, the anode active material layer can be a layer that contains only the anode active material. On the other hand, when the anode active material is in a powdery form, the anode active material layer can be a layer that contains the anode active material and the binder. The sort and content of the binder are as explained above.

The electroconductive material contained in the anode active material layer is not particularly limited, as long as it is electroconductive. The examples include a carbonaceous material, a perovskite-type electroconductive material, a porous electroconductive polymer and a porous metal material. The carbonaceous material may be porous or non-porous. Concrete examples of porous carbonaceous materials include mesoporous carbon. Concrete examples of non-porous carbonaceous materials include graphite, acetylene black, carbon nanotubes and carbon fibers.

The material for the anode current collector used in the present invention is not particularly limited, as long as it is electroconductive. The examples include copper, stainless-steel, nickel and carbon. Of them, SUS and Ni are preferably used as the anode current collector. As the form of the anode current collector, there may be mentioned a foil form, a plate form and a mesh (grid) form, for example. In the present invention, the below-described battery case may also function as the anode current collector.

The electrolyte layer used in the present invention is retained between the air electrode layer and the anode active material layer and functions to exchange metal ions between those layers.

As the electrolyte layer, there may be used a liquid electrolyte, a gel electrolyte, a solid electrolyte, etc. They may be used alone or in combination of two or more kinds.

As the liquid electrolyte, there may be used an aqueous or non-aqueous liquid electrolyte.

It is preferable to appropriately select the sort of the non-aqueous liquid electrolyte, depending on the sort of metal ions to be conducted. For example, as the non-aqueous liquid electrolyte used in a lithium-air battery, generally, one containing a lithium salt and a non-aqueous solvent is used. Examples of the lithium salt include inorganic lithium salts such as $LiPF_6$, $LiBF_4$, $LiClO_4$ and $LiAsF_6$, and organic lithium salts such as $LiCF_3SO_3$, $LiN(SO_2CF_3)$(Li-TFSA), $LiN(SO_2C_2F_5)_2$ and $LiC(SO_2CF_3)_3$. Examples of the non-aqueous solvent include ethylene carbonate (EC), propylene carbonate (PC), dimethyl carbonate (DMC), diethyl carbonate (DEC), ethyl methyl carbonate (EMC), ethyl carbonate, butylene carbonate, γ-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. In the non-aqueous liquid electrolyte, the concentration of the lithium salt is 0.5 to 3 mol/L, for example.

In the present invention, as the non-aqueous liquid electrolyte or non-aqueous solvent, it is preferable to use a highly viscous one. Examples of highly viscous non-aqueous liquid electrolytes or solvents include ionic liquids. Examples of ionic liquids include N-methyl-N-propylpiperidinium bis(trifluoromethanesulfonyl)amide (PP13TFSA), N-methyl-N-propylpyrrolidinium bis(trifluoromethanesulfonyl)amide (P13TFSA), N-butyl-N-methylpyrrolidinium bis(trifluoromethanesulfonyl)amide (P14TFSA), N,N-diethyl-N-methyl-N-(2-methoxyethyl)ammonium bis(trifluoromethanesulfonyl)amide (DEMETFSA) and N,N,N-trimethyl-N-propylammonium bis(trifluoromethanesulfonyl)amide (TMPATFSA).

Of the non-aqueous solvents, in order to run the oxygen reduction reaction described by the above formula (II) or (III), it is more preferable to use a liquid electrolyte solvent which is stable to oxygen radical. Examples of such a non-aqueous solvent include acetonitrile (AcN), 1,2-dimethoxyethane (DME), dimethylsulfoxide (DMSO), N-methyl-N-propylpiperidinium bis(trifluoromethanesulfonyl)amide (PP13TFSA), N-methyl-N-propylpyrrolidinium bis(trifluoromethanesulfonyl)amide (P13TFSA) and N-butyl-N-methylpyrrolidinium bis(trifluoromethanesulfonyl)amide (P14TFSA).

It is preferable to select the sort of the aqueous liquid electrolyte, depending on the sort of metal ions to be conducted. For example, as the aqueous liquid electrolyte used in a lithium-air battery, one containing a lithium salt and water is generally used. Examples of the lithium salt include lithium salts such as LiOH, LiCl, $LiNO_3$ and $CH_3CO_2Li$.

The gel electrolyte used in the present invention is generally one gelled by adding a polymer to a non-aqueous liquid electrolyte. For example, the non-aqueous gel electrolyte for a lithium-air battery is obtained by a gelling process in which a polymer such as polyethylene oxide (PEO), polyacrylonitrile (PAN) or polymethyl methacrylate (PMMA) is added to the above-mentioned non-aqueous liquid electrolyte. In the present invention, preferred is an LiTF-SA($LiN(CF_3SO_2)_2$)-PEO-based non-aqueous gel electrolyte.

As the solid electrolyte, there may be used a sulfide-based solid electrolyte, an oxide-based solid electrolyte, a polymer electrolyte, etc.

Concrete examples of the sulfide-based solid electrolyte include $Li_2S\text{-}P_2S_5$, $Li_2S\text{-}P_2S_3$, $Li_2S\text{-}P_2S_3\text{-}P_2S_5$, $Li_2S\text{-}SiS_2$, $Li_2S\text{-}Si_2S$, $Li_2S\text{-}B_2S_3$, $Li_2S\text{-}GeS_2$, $LiI\text{-}Li_2S\text{-}P_2S_5$, $LiI\text{-}Li_2S\text{-}SiS_2\text{-}P_2S_5$, $Li_2S\text{-}SiS_2\text{-}Li_4SiO_4$, $Li_2S\text{-}SiS_2\text{-}Li_3PO_4$, $Li_3PS_4\text{-}Li_4GeS_4$, $Li_{3.4}P_{0.6}Si_{0.4}S_4$, $Li_{3.25}P_{0.25}Ge_{0.76}S_4$ and $Li_{4-x}Ge_{1-x}P_xS_4$.

Concrete examples of the oxide-based solid electrolyte include LiPON (lithium phosphate oxynitride), $Li_{1.3}Al_{0.3}Ti_{0.7}(PO_4)_3$, $La_{0.51}Li_{0.34}TiO_{0.74}$, $Li_3PO_4$, $Li_2SiO_2$ and $Li_2SiO_4$.

It is preferable to appropriately select the polymer electrolyte, depending on the sort of metal ions to be conducted. For example, the polymer electrolyte for a lithium-air battery generally contains a lithium salt and a polymer. As the lithium salt, at least any one of the above-mentioned inorganic and organic lithium salts can be used. The polymer is not particularly limited, as long as it is able to form a complex with a lithium salt, and the examples include polyethylene oxide.

The air battery of the present invention may be provided with a separator between the air electrode and the anode. As the separator, for example, there may be mentioned porous films of polyethylene, polypropylene, etc.; and non-woven fabrics made of resins such as polypropylene, and non-woven fabrics such as a glass fiber non-woven fabric.

These materials usable as the separator that can be also used as a liquid electrolyte-supporting material, by impregnating these materials with the above-described liquid electrolyte.

In general, the air battery of the present invention is provided with a battery case for housing the air electrode, the anode, the electrolyte layer, etc. Concrete examples of the form of the battery case include a coin form, a flat plate form, a cylindrical form and a laminate form. The battery case may be an open-to-the-atmosphere battery case or a closed battery case. The open-to-the-atmosphere battery case is a battery case having a structure which allows at least the air electrode layer to be sufficiently exposed to the atmosphere. On the other hand, when the battery case is a closed battery case, the closed battery case is preferably provided with gas (air) inlet and outlet tubes. In this case, it is preferable that the introduced/emitted gas has a high oxygen concentration, and it is more preferable that the gas is dry air or pure oxygen. Also, it is preferable that the oxygen concentration is high at the time of discharge and low at the time of charge.
An oxygen permeable film and/or a water repellent film may be provided inside the battery case, depending on the structure of the battery case.

Examples

Hereinafter, the present invention will be further described in detail, by way of examples and comparative examples. However, the present invention is not limited to the examples.

1. Production of exfoliated carbon fibers, etc.

[Example 1]

1-1. Electrochemical treatment

PAN-based carbon fibers were fixed at the tip of a platinum anode, immersed in a concentrated nitric acid liquid electrolyte and then subjected to a constant current electrochemical treatment, thereby synthesizing a nitric acid-graphite intercalation compound.

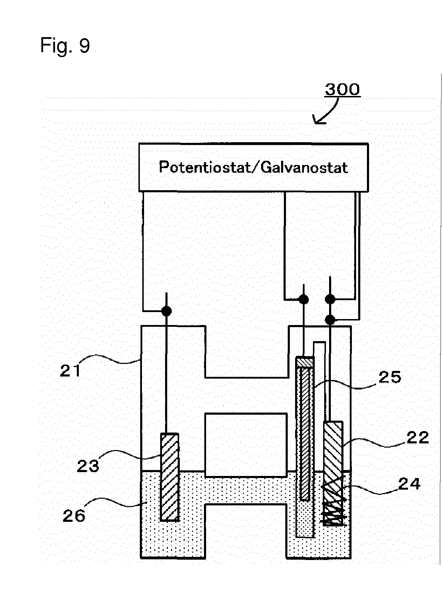

Fig. 9 is a schematic view of a constant current electrochemical treatment device. The constant current electrochemical treatment device 300 used in the present invention is equipped with an electrochemical cell and potentiostat/galvanostat (manufactured by: Solartron; model: 1287).
Details of the electrochemical cell are as follows. As electrode, platinum plates 22 and 23 (50 mm length×10 mm width×0.2 mm thickness each) were set in a reaction container 21 with a volume of 300 mL. On the lower end of the platinum plate 22, which functions as anode (working electrode), PAN (polyacrylonitrile)-based carbon fibers 24 cut in 5 cm length were fixed with a tape. As reference electrode, a silver/silver chloride electrode 25 was settled near the anode. As liquid electrolyte, 100 mL of 13 mol/dm$^3$ nitric acid (26 shown in Fig. 9) was added so that the PAN (polyacrylonitrile)-based carbon fibers 24 were sufficiently immersed.
The platinum plates 22 and 23 and the silver/silver chloride electrode of the electrochemical cell, were connected to the potentiostat/galvanostat. To the PAN(polyacrylonitrile)-based carbon fibers 24, constant current was applied at a current density of 10 A/g, until the applied charge amount reached 2,400 C, thus synthesizing a nitric acid-graphite intercalation compound.
1-2. Washing
The thus-obtained nitric acid-graphite intercalation compound was removed from the electrochemical cell. For removal of nitric acid adhering to the surface of the nitric acid-graphite intercalation compound, the nitric acid-graphite intercalation compound was repeatedly washed with a sufficient amount of water. Then, the nitric acid-graphite intercalation compound was dehydrated and dried in a desiccator for 24 hours.

1-3. Carbonizing treatment

The dried nitric acid-graphite intercalation compound was decomposed by a heat treatment, thus carrying out a carbonizing treatment of the carbon fibers. In particular, the dried nitric acid-graphite intercalation compound was inserted in an electric furnace and subjected to a rapid heat treatment for 5 seconds at 1,000°C in the air, thereby extending the distance between carbon atom layers and producing the exfoliated carbon fibers of Example 1.

[Example 2]

An electrochemical treatment, washing and carbonizing treatment (1,000°C) were carried out in the same manner as Example 1. After the carbonizing treatment, the carbonaceous material was added to ethanol, highly dispersed in the ethanol by applying ultrasonic waves, and then dried, thus producing the exfoliated carbon fibers of Example 2.

[Example 3]

An electrochemical treatment, washing and carbonizing treatment (1,000°C) were carried out in the same manner as Example 1. After the carbonizing treatment, the carbonaceous material was added to acetone, highly dispersed in the acetone by applying ultrasonic waves, and then dried, thus producing the exfoliated carbon fibers of Example 3.

[Example 4]

An electrochemical treatment, washing and carbonizing treatment (1,000°C) were carried out in the same manner as Example 1, except that PITCH-based carbon fibers (manufactured by: Nippon Graphite Fiber Corporation; product name: YS-95; fiber diameter: 5 $\mu$m; mass: 0.1 g) was used in place of the PAN (polyacrylonitrile)-based carbon fibers, thus producing the exfoliated carbon fibers of Example 4.

[Example 5]

An electrochemical treatment, washing and carbonizing treatment (1,000°C) were carried out in the same manner as Example 1, except that PITCH-based carbon fibers (manufactured by: Nippon Graphite Fiber Corporation; product name: YS-95; fiber diameter: 5 $\mu$m; mass: 0.1 g) was used in place of the PAN (polyacrylonitrile)-based carbon fibers. After the carbonizing treatment, the carbonaceous material was added to ethanol, highly dispersed in the ethanol by applying ultrasonic waves, and then dried, thus producing the exfoliated carbon fibers of Example 5.

[Example 6]

An electrochemical treatment, washing and carbonizing treatment (1,000°C) were carried out in the same manner as Example 1, except that PITCH-based carbon fibers (manufactured by: Nippon Graphite Fiber Corporation; product name: YS-95; fiber diameter:5 $\mu$m; mass:0.1 g) was used in place of the PAN (polyacrylonitrile)-based carbon fibers. After the carbonizing treatment, the carbonaceous material was added to acetone, highly dispersed in the acetone by applying ultrasonic waves, and then dried, thus producing the exfoliated carbon fibers of Example 6.

[Example 7]

An electrochemical treatment and washing were carried out in the same manner as Example 1, except that PITCH-based carbon fibers (manufactured by: Nippon Graphite Fiber Corporation; product name: YS-95; fiber diameter: 5 $\mu$m; mass: 0.1 g) was used in place of the PAN (polyacrylonitrile)-based carbon fibers. A carbonizing treatment was carried out in the same manner as Example 1, except that the temperature condition was changed from 1,000°C to 700°C, thus producing the exfoliated carbon fibers of Example 7.

[Comparative Example 1]

An electrochemical treatment and washing were carried out in the same manner as Example 1. A carbonizing treatment was carried out in the same manner as Example 1, except that the temperature condition was changed from 1,000°C to 350°C, thus producing the exfoliated carbon fibers of Comparative Example 1.

[Comparative Example 2]

An electrochemical treatment and washing were carried out in the same manner as Example 1, except that PITCH-based carbon fibers (manufactured by: Nippon Graphite Fiber Corporation; product name: YS-95; fiber diameter: 5 $\mu$m; mass: 0.1 g) was used in place of the PAN (polyacrylonitrile)-based carbon fibers. A carbonizing treatment was carried out in the same manner as Example 1, except that the temperature condition was changed from 1,000°C to 350°C, thus producing the exfoliated carbon fibers of Comparative Example 2.

[Comparative Example 3]

An electrochemical treatment and washing were carried out in the same manner as Example 1. A carbonizing treatment was carried out in the same manner as Example 1, except that the temperature condition was changed from 1,000°C to 700°C, thus producing the exfoliated carbon fibers of Comparative Example 3.

[Reference Example 1]

A 500 mL reaction container equipped with a Liebig condenser tube was placed in an oil bath. Next, 200 mL of a potassium hydroxide aqueous solution at a concentration of 8 mol/L and 5 g of a carbonaceous material were put in the reaction container and stirred with a magnetic stirrer. The temperature of the oil bath was set to 80°C, and with running cooling water through the Liebig condenser tube, an alkali aqueous solution was heated for 6 hours to conduct an alkali activation treatment on the carbonaceous material, thus producing the carbonaceous material for an air electrode of an air battery of Reference Example 1.

2. Evaluation of carbonaceous material

2-1. SEM observation

The exfoliated carbon fibers of Example 1 were observed with a scanning electron microscope (hereinafter referred to as SEM) in the following conditions. In particular, SEM observation was carried out with a scanning electron microscope (manufactured by: Hitachi, product name: S-5500) at an accelerating voltage of 10 kV and a magnification of 5,000x.
Fig. 4 is an SEM image of the exfoliated carbon fibers of Example 1. As is clear from Fig. 4, each of the exfoliated carbon fibers of Example 1 is such a flake solid that the longer diameter is 1 to 10 $\mu$m; the shorter diameter is 0.5 to 5 $\mu$m; and the aspect ratio is 2 to 9.

2-2. Measurement of D/G ratio

Raman measurement was carried out on the exfoliated carbon fibers of Example 1, by means of a laser Raman spectrophotometer. Raman measurement was carried out by applying argon laser to measurement points provided at 5 $\mu$m vertical and horizontal intervals on a 45 $\mu$m by 45 $\mu$m-square measurement area (total 100 points), for 200 seconds each. For the thus-obtained Raman spectrum of each carbonaceous material, the peak area at 1360 $cm^{-1}$ (D band) and the peak area at 1580 $cm^{-1}$ (G band) were calculated by deducting the base line, and then the ratio of the peak area of the D band with respect to the peak area of the G band was calculated. The peak area ratio calculated for each measurement point was referred to as the D/G ratio at that measurement point.

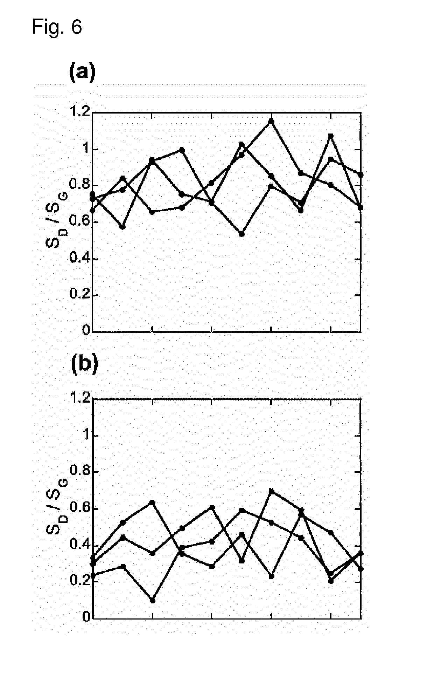

Fig. 5 is a TEM image of the exfoliated carbon fibers of Example 1. A white flame scale and crosses (+) shown in Fig. 5 correspond to the measurement point of the Raman measurement. Fig. 6(a) is a graph showing changes in the D/G ratio in any three of lines out of lines of measurement points shown in Fig. 5 (that is, lines I to X). Fig. 6(b) is a graph showing changes in the D/G ratio in any three of rows out of rows of measurement points shown in Fig. 5 (that is, rows 1 to 10).
It is clear from Fig. 6(a) that the D/G ratio in the line direction (vertical direction in Fig. 5) changes within a range of about 0.5 to 1.2. On the other hand, it is clear from Fig. 6(b) that the D/G ratio in the row direction (horizontal direction in Fig. 5) changes within a range of about 0.1 to 0.7. Therefore, it is clear that in both the line and row directions, there is a certain measurement variation in the D/G ratio. This is considered because the electron density of carbon atoms and the amount of defects in the carbonaceous material depend on the crystallites of carbon.
2-3. Quantitative determination of edge area
Quantitative determination of the edge area was carried out on the exfoliated carbon fibers of Examples 1 to 7 and Comparative Examples 1 to 3, and also on Ketjen Black (Ketjen-EC600JD) and carbon black (Vulcan XC72).

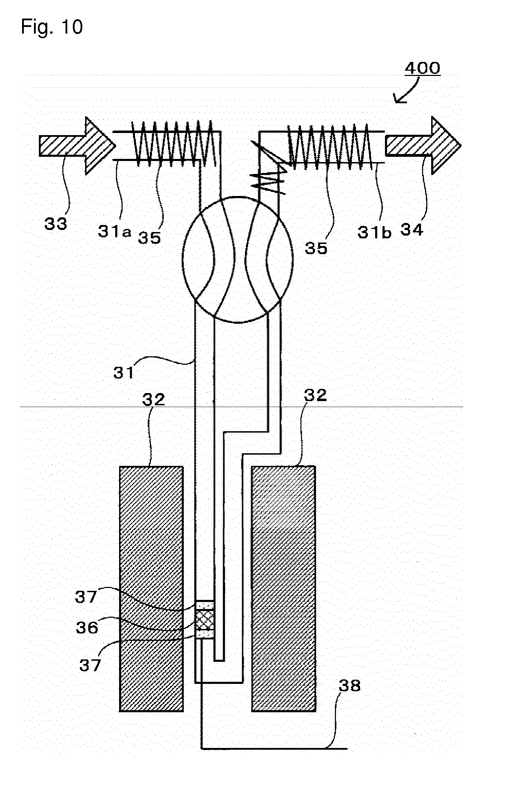

Fig. 10 is a schematic view of a temperature programming device used for the quantitative determination of the edge area. The temperature programming device 400 is equipped with a silica tube 31 and a heating furnace 32. The silica tube 31 is equipped with a gas inlet 31a and a gas outlet 31b. An arrow 33 shows the supplying direction of supply gas. An arrow 34 shows the emitting direction of emission gas. The supply gas and the emission gas will be described below in detail. A tape heater 35 was wound around predetermined areas near the gas inlet 31a and the gas outlet 31b.
As shown in Fig. 10, the silica tube 31 is totally curved in a U shape and installed, and near the curved part of the tube, a carbonaceous material sample 36 is placed. To fix the carbonaceous material sample 36, an appropriate amount of silica wool 37 was filled through the both openings of the silica tube so as to sandwich the carbonaceous material sample 36. The heating furnace 32 was installed so that the whole curved part of the silica tube 31 can be heated. In addition, to measure the temperature of the carbonaceous material sample 36, a thermocouple 38 was installed.
First, helium was supplied through the gas inlet 31a to replace the air inside the silica tube 31 with a helium atmosphere. Next, the temperature inside the silica tube 31 was set to 100°C and kept for one hour, thereby releasing moisture adsorbed in the carbonaceous material sample 36. Then, the temperature inside the silica tube 31 was increased to 1,100°C at a heating rate of 4°C/min and kept for one hour, thereby thermally desorbing carbon monoxide (CO) and

carbon dioxide ($CO_2$).

Next, the temperature inside the silica tube 31 was set to 600°C, and hydrogen was supplied to the silica tube 31. The carbonaceous material sample having had passed through the thermal desorption was subsequently subjected to a hydrogen treatment to bind hydrogen atoms for one hour to the edge carbon atoms contained in the sample. Then, the hydrogen supply was stopped. Instead, helium was supplied to the silica tube 31 to replace the hydrogen inside the tube 31 with a helium atmosphere and cool the temperature inside the tube to room temperature. Then, the temperature inside the silica tube 31 was increased to 800°C at a heating rate of 20°C/min. Next, oxygen was supplied at a rate of 5% with respect to the amount of helium supplied, and the temperature inside the tube was increased to 1,000°C at a heating rate of 4°C/min. The moisture released upon the thermal oxidation from 800°C to 1,000°C was quantitated with a Karl Fischer water content meter. The molarity of hydrogen ($H_2$) was obtained from the molarity of the quantitated water ($H_2O$), and the edge area S of the surface of the carbonaceous material was calculated from the following formula (A).

$$\text{Formula (A): } S=(M \times 6.0 \times 10^{23}) \times 0.082$$

In the formula (A), S is the edge area of the surface of the carbonaceous material ($m^2$), and M is the molarity of hydrogen (mol/g).

3. Production of air electrode

[Example 8]

First, the exfoliated carbon fibers of Example 1 and a PTFE binder (manufactured by Daikin Industries, Ltd.) were mixed at the following ratio: exfoliated carbon fibers:PTFE=90% by mass:10% by mass. As solvent, a predetermined amount of ethanol was added to the mixture. Next, the mixture was roll-pressed and pre-dried under a temperature condition of 60°C and a vacuum condition. Then, the dried mixture was appropriately cut out and then subjected to final drying under a temperature condition of 120°C and a vacuum condition, thus producing the air electrode of Example 8.

[Examples 9 to 14]

The air electrodes of Examples 9 to 14 were produced by carrying out the mixing of materials, pre-drying, cutting out and final drying in the same manner as Example 8, except that the exfoliated carbon fibers of Examples 2 to 7 were used respectively, in place of the exfoliated carbon fibers of Example 1.

[Comparative Example 4]

The air electrode of Comparative Example 4 was produced by carrying out the mixing of materials, pre-drying, cutting out and final drying in the same manner as Example 8, except that Ketjen Black (Ketjen-EC600JD) was used in place of the exfoliated carbon fibers of Example 1.

[Comparative Example 5]

The air electrode of Comparative Example 5 was produced by carrying out the mixing of materials, pre-drying, cutting out and final drying in the same manner as Example 8, except that carbon black (Vulcan XC72) was used in place of the exfoliated carbon fibers of Example 1.

[Comparative Examples 6 to 8]

The air electrodes of Comparative Examples 6 to 8 were produced by carrying out the mixing of materials, pre-drying, cutting out and final drying in the same manner as Example 8, except that the exfoliated carbon fibers of Comparative Examples 1 to 3 were used respectively, in place of the exfoliated carbon fibers of Example 1.

4. Production of air battery

[Example 15]

As air electrode, the air electrode of Example 8 was used.

As liquid electrolyte, one prepared by dissolving lithium bis(trifluoromethanesulfonyl)amide (manufactured by Kishida Chemical Co., Ltd.) in N-methyl-N-propylpiperidinium bis(trifluoromethanesulfonyl)amide (manufactured by: Kanto Chemical Co., Inc., product name: PP13TFSA) so as to have a concentration of 0.32 mol/kg and stirring overnight in an argon atmosphere, was used. As separator, a polypropylene non-woven fabric (JH1004N) was used.

As anode, a lithium metal (manufactured by Kyokuto Kinzoku Ltd., thickness 200 $\mu$m, $\varphi$15 mm) was used.

As battery case, an F-type cell (manufactured by Hokuto Denko Corporation) was used.

These constituent members were housed in the battery case so that the lithium metal, the separator impregnated with the liquid electrolyte, and the air electrode containing the exfoliated carbon fibers were stacked in this order, starting with the closest to the bottom of the battery case, thus producing the air battery of Example 15. Moreover, the whole battery case was housed in a 500 mL glass desiccator with a gas replacement cock so that the atmosphere inside the battery case can be controlled.

The above process was all carried out in a glove box under a nitrogen atmosphere.

[Examples 16 to 21]

The air batteries of Examples 16 to 21 were produced by using the same constituent members as Example 15, except that the air electrodes of Examples 9 to 14 were used respectively, in place of the air electrode of Example 8.

[Comparative Examples 9 to 13]

The air batteries of Comparative Examples 9 to 13 were produced by using the same constituent members as Example 15, except that the air electrodes of Comparative Examples 4 to 8 were used respectively, in place of the air electrode of Example 8.

5. Charge-discharge test of air battery

A charge-discharge test was carried out on the air batteries of Examples 15 to 21 and Comparative Examples 9 to 13 to measure charging capacity and reaction resistance.

First, each air battery was allowed to stand under a temperature condition of 60°C for 3 hours. Then, a charge-discharge test was carried out by means of a charge-discharge testing device (manufactured by: Nagano; product name: BTS2004H), with supplying pure oxygen (manufactured by: Taiyo Nippon Sanso Corporation, 99.9%) to the air electrode layer of each air battery, under a temperature condition of 60°C and conditions of a current density of 0.05 mA/cm$^2$, an end-of-discharge voltage of 2.0 V and an end-of-charge voltage of 3.8 V.

6. Evaluation

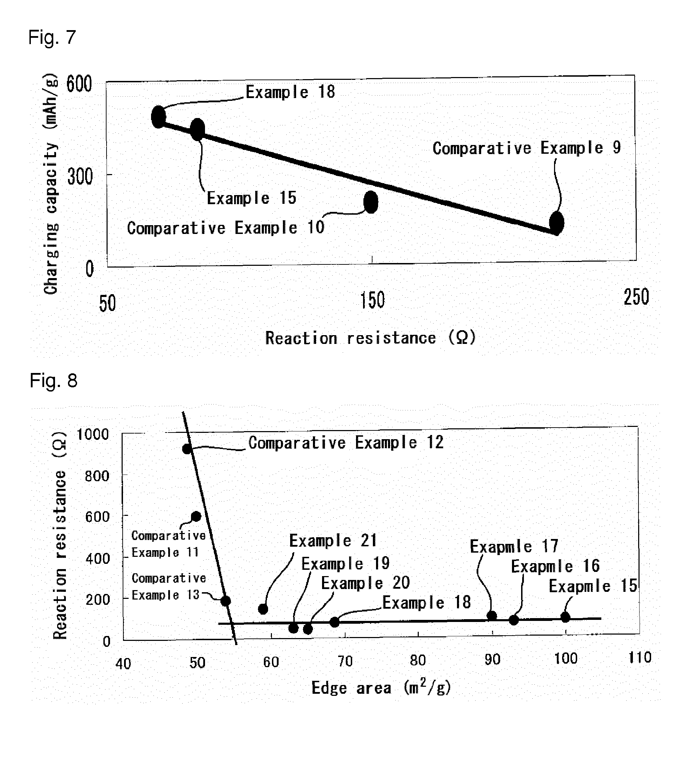

Fig. 7 is a graph showing the relationship between the reaction resistance and charging capacity of the air batteries of Examples 15 and 18 and Comparative Examples 9 and 10. Fig. 8 is a graph showing the relationship between the reaction resistance of the air batteries of Examples 15 to 21 and Comparative Examples 11 to 13, and the edge area of the surface of the exfoliated carbon fibers used in the air batteries. The following Table 1 shows the sort of the carbonaceous materials used in the air electrodes of the air batteries of Examples 15 to 21 and Comparative Examples 9 to 13, the edge area of the carbonaceous materials (m$^2$/g), and the reaction resistance and charging capacity of the air batteries.

Table 1

| | Carbonaceous material used in air electrode | | | | Evaluation of carbonaceous material used in air electrode | Evaluation of air battery | |
| --- | --- | --- | --- | --- | --- | --- | --- |
| | Experimental number | Sort of carbonaceous material | Temperature of exfoliation (°C) | Type of dispersion medium upon application of ultrasonic waves | Edge area (m$^2$/g) | Reaction resistance ($\Omega$) | Charging capacity (mAh/g) |
| Example 15 | Example 1 | PAN-based carbonaceous material | 1000 | - | 100 | 85 | 440 |
| Example 16 | Example 2 | PAN-based carbonaceous material | 1000 | Ethanol | 93 | 75 | - |
| Example 17 | Example 3 | PAN-based carbonaceous material | 1000 | Acetone | 90 | 95 | - |
| Example 18 | Example 4 | PITCH-based carbonaceous material | 1000 | - | 69 | 70 | 483 |
| Example 19 | Example 5 | PITCH-based carbonaceous material | 1000 | Ethanol | 63 | 45 | - |
| Example 20 | Example 6 | PITCH-based carbonaceous material | 1000 | Acetone | 65 | 40 | - |
| Example 21 | Example 7 | PITCH-based carbonaceous material | 700 | - | 59 | 138 | - |
| Comparative Example 9 | - | Ketjen Black | - | - | - | 220 | 125 |
| Comparative Example 10 | - | Vulcan | - | - | - | 150 | 200 |
| Comparative Example 11 | Comparative Example 1 | PAN-based carbonaceous material | 350 | - | 50 | 591 | - |

EP 2 894 707 A1

(continued)

| | | Carbonaceous material used in air electrode | | | | Evaluation of carbonaceous material used in air electrode | Evaluation of air battery | |
|---|---|---|---|---|---|---|---|---|
| | Experimental number | Sort of carbonaceous material | Temperature of exfoliation (°C) | Type of dispersion medium upon application of ultrasonic waves | | Edge area (m$^2$/g) | Reaction resistance ($\Omega$) | Charging capacity (mAh/g) |
| Comparative Example 12 | Comparative Example 2 | PITCH-based carbonaceous material | 350 | - | | 49 | 918 | - |
| Comparative Example 13 | Comparative Example 3 | PAN-based carbonaceous material | 700 | - | | 54 | 183 | - |

Fig. 7 is a graph with charging capacity (mAh/g) on the vertical axis and reaction resistance ($\Omega$) on the horizontal axis. As is clear from Fig. 7 and Table 1, in the case of the air battery of Comparative Example 9 using Ketjen Black in the air electrode, the charging capacity is 125 mAh/g and the reaction resistance is 220 $\Omega$. In the case of the air battery of Comparative Example 10 using carbon black in the air electrode, the charging capacity is 200 mAh/g and the reaction resistance is 150 $\Omega$. On the other hand, as is clear from Fig. 7 and Table 1, in the case of the air battery of Example 15 using the exfoliated carbon fibers of Example 1 in the air electrode, the charging capacity is 440 mAh/g and the reaction resistance is 85 $\Omega$. In the case of the air battery of Example 18 using the exfoliated carbon fibers of Example 4 in the air electrode, the charging capacity is 483 mAh/g and the reaction resistance is 70 $\Omega$.

From the above results, it is clear that compared to the air batteries of Comparative Examples 9 and 10 using the conventional carbonaceous materials, the charging capacities of the air batteries of Examples 15 and 18 are increased and the reaction resistances of the same are decreased by using the exfoliated carbon fibers in their air electrodes.

As is also clear from Fig. 7, compared to the air batteries using Ketjen Black or carbon black, which are spherical carbonaceous materials having a small average aspect ratio, the air battery of the present invention in which the exfoliated carbon fibers having a relatively large average aspect ratio is used, can keep the reaction resistance smaller and increase the charging capacity higher.

In addition, as shown in Fig. 7, the asymptote of the data of Examples 15 and 18 and Comparative Examples 9 and 10 is represented by the following formula (B), and it is clear from the formula (B) that there is a correlation between the charging capacity and reaction resistance of the air batteries, even though the carbonaceous materials used are differ in sort.

$$\texttt{Formula (B): } \texttt{y=-2.48x+638}$$

In the formula (B), y is charging capacity (mAh/g) and x is reaction resistance ($\Omega$).

Fig. 8 is a graph showing a comparison between the edge areas of the exfoliated carbon fibers, and a comparison between the reaction resistances of the air batteries using the exfoliated carbon fibers. Fig. 8 is a graph with the reaction resistance of the air battery ($\Omega$) on the vertical axis and the edge area of the surface of the carbonaceous material ($m^2/g$) on the horizontal axis.

As is clear from Fig. 8 and Table 1, the reaction resistance of the air battery of Comparative Example 11 is 591 $\Omega$, and the edge area of the surface of the exfoliated carbon fibers (Comparative Example 1) used in the air battery of Comparative Example 11 is 50 $m^2/g$. The reaction resistance of the air battery of Comparative Example 12 is 918 $\Omega$, and the edge area of the surface of the exfoliated carbon fibers (Comparative Example 2) used in the air battery of Comparative Example 12 is 49 $m^2/g$. The reaction resistance of the air battery of Comparative Example 13 is 183 $\Omega$, and the edge area of the surface of the exfoliated carbon fibers (Comparative Example 3) used in the air battery of Comparative Example 13 is 54 $m^2/g$.

On the other hand, as is clear from Fig. 8 and Table 1, the reaction resistance of the air battery of Example 15 is 85 $\Omega$, and the edge area of the surface of the exfoliated carbon fibers (Example 1) used in the air battery of Example 15 is 100 $m^2/g$. The reaction resistance of the air battery of Example 16 is 75 $\Omega$, and the edge area of the surface of the exfoliated carbon fibers (Example 2) used in the air battery of Example 16 is 93 $m^2/g$. The reaction resistance of the air battery of Example 17 is 95 $\Omega$, and the edge area of the surface of the exfoliated carbon fibers (Example 3) used in the air battery of Example 17 is 90 $m^2/g$. The reaction resistance of the air battery of Example 18 is 70 $\Omega$, and the edge area of the surface of the exfoliated carbon fibers (Example 4) used in the air battery of Example 18 is 69 $m^2/g$. The reaction resistance of the air battery of Example 19 is 45 $\Omega$, and the edge area of the surface of the exfoliated carbon fibers (Example 5) used in the air battery of Example 19 is 63 $m^2/g$. The reaction resistance of the air battery of Example 20 is 40 $\Omega$, and the edge area of the surface of the exfoliated carbon fibers (Example 6) used in the air battery of Example 20 is 65 $m^2/g$. The reaction resistance of the air battery of Example 21 is 138 $\Omega$, and the edge area of the surface of the exfoliated carbon fibers(Example 7) used in the air battery of Example 21 is 59 $m^2/g$.

From the above results, the following is clear: while the edge areas of the exfoliated carbon fibers (Comparative Examples 1 to 3) used in the air batteries of Comparative Examples 11 to 13 are 54 $m^2/g$ or less, the edge areas of the exfoliated carbon fibers (Examples 1 to 7) used in the air batteries of Examples 15 to 21 exceed 55 $m^2/g$. While the reaction resistances of the air batteries of Comparative Examples 9 and 10 using the conventional carbonaceous materials and the reaction resistances of the air batteries of Comparative Examples 11 to 13 using the exfoliated carbon fibers of Comparative Examples 1 to 3, are 150 $\Omega$ or more, the reaction resistances of the air batteries of Examples 15 to 21 using the exfoliated carbon fibers of Examples 1 to 7 are less than 140 $\Omega$. From these results, it is clear that the reaction resistance is decreased by using, in the air electrode, the exfoliated carbon fibers having a larger edge area and a larger average aspect ratio than the conventional carbonaceous materials.

As shown in Fig. 8, it is also clear that the asymptote of the data of Comparative Examples 11 to 13 is represented by the following formula (C):

$$\texttt{Formula (C): } y=-134x+7410$$

In the formula (C), y is reaction resistance ($\Omega$) and x is edge area ($m^2/g$).

Also, as shown in Fig. 8, it is clear that the asymptote of the data of Examples 15 to 21 is represented by the following formula (D):

$$\texttt{Formula (D): } y=1.13x-22.3$$

In the formula (D), y is reaction resistance ($\Omega$) and x is edge area ($m^2/g$).

From the formulae (C) and (D), it is clear that there is a correlation between the reaction resistance of the air battery and the edge area of the exfoliated carbon fibers used in the air battery, insofar as considering the exfoliated carbon fibers having a small edge area (Comparative Examples 1 to 3) and also as considering the exfoliated carbon fibers having a large edge area (Examples 1 to 7).

Reference Signs List

1. Electrolyte layer
2. Air electrode layer
3. Anode active material layer
4. Air electrode current collector
5. Anode current collector
6. Air electrode
7. Anode
11. Carbon atom layer
11a, $11a_1$, $11a_2$. Edge carbon atom
11b. Carbon atom other than edge carbon atom
11c. Distance between edge carbon atoms
11d. Distance between carbon atom layers
11e. Area occupied by edge carbon atoms
21. Reaction container
22. Platinum plate as anode (working electrode)
23. Platinum plate as cathode (counter electrode)
24. PAN (polyacrylonitrile)-based carbon fibers
25. Silver/silver chloride electrode
26. 13 mol/$dm^3$ nitric acid
31. Silica tube
31a. Gas inlet
31b. Gas outlet
32. Heating furnace
33. Arrow showing the supplying direction of supply gas
34. Arrow showing the emitting direction of emission gas
35. Tape heater
36. Carbonaceous material sample
37. Silica wool
38. Thermocouple
100. Air battery
200. Carbonaceous material
300. Constant current electrochemical treatment device
400. Temperature programming device

**Claims**

1. A carbonaceous material for an air electrode of an air battery,
   wherein the carbonaceous material is to be used in the air electrode of an air battery, and
   wherein an average aspect ratio of the carbonaceous material is 1 or more and less than 10, and an edge area of a surface of the carbonaceous material is 55 $m^2$/g or more.

2. The carbonaceous material for an air electrode of an air battery according to claim 1, wherein the carbonaceous material is exfoliated carbon fibers.

3. An air battery comprising at least an air electrode, an anode and an electrolyte layer disposed between the air electrode and the anode,
   wherein the air electrode contains the carbonaceous material for an air electrode of an air battery defined by claim 1 or 2.

4. The air battery according to claim 3, wherein the anode contains a lithium metal or a lithium compound.

5. An air battery comprising: an air electrode; a lithium metal anode or a lithium compound anode; and an electrolyte disposed between the air electrode and the anode,
   wherein the air electrode contains a porous carbon fiber material having connected three-phase interface sites; a D/G ratio of the exfoliated carbon fibers that means a ratio of a graphitized part D to a defective part G obtained from a Raman shift, is 0.1 to 1.5; and an edge area of the three-phase interface sites is 55 $m^2$/g or more.

6. The air battery according to claim 5, wherein the porous carbon fiber material is exfoliated carbon fibers.

7. The air battery according to claim 5 or 6, wherein an average aspect ratio of the porous carbon fiber material is 1 or more and less than 10.

Fig. 1

Fig. 2

Fig. 3

(a)

(b)

Fig. 4

Fig. 5

Fig. 6

(a)

(b)

Fig. 7

Fig. 8

Fig. 9

Fig. 10

## INTERNATIONAL SEARCH REPORT

| International application No. |
| --- |
| PCT/JP2013/074249 |

A. CLASSIFICATION OF SUBJECT MATTER
*H01M12/08*(2006.01)i, *H01M4/96*(2006.01)i

According to International Patent Classification (IPC) or to both national classification and IPC

B. FIELDS SEARCHED

Minimum documentation searched (classification system followed by classification symbols)
H01M12/08, H01M4/96

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
| --- | --- | --- |
| A | WO 2011/055739 A1 (National University Corporation Gunma University), 12 May 2011 (12.05.2011), claims; paragraphs [0093] to [0110], [0165] & US 2012/0220446 A1 & EP 2497573 A1 | 1-7 |
| A | JP 2005-125187 A (Fuji Xerox Co., Ltd.), 19 May 2005 (19.05.2005), claims; paragraph [0070] & US 2005/0090388 A1 | 1-7 |
| P,X | JP 2013-110106 A (Nagoya University), 06 June 2013 (06.06.2013), claims; paragraphs [0024], [0028], [0036]; fig. 1 to 4 (Family: none) | 1,3-5,7 |

☒ Further documents are listed in the continuation of Box C.　　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 September, 2013 (30.09.13) | 08 October, 2013 (08.10.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/074249

C (Continuation).   DOCUMENTS CONSIDERED TO BE RELEVANT

| Category* | Citation of document, with indication, where appropriate, of the relevant passages | Relevant to claim No. |
|---|---|---|
| P,A | WO 2012/172656 A1  (Toyota Motor Corp.),<br>20 December 2012 (20.12.2012),<br>claims; paragraphs [0016] to [0024]<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* JP 2002015737 A